# EUROPEAN PATENT SPECIFICATION

(11) **EP 2 755 108 B1**
(45) Date of publication and mention of the grant of the patent: **22.07.2020**
(21) Application number: 14275003.3
(22) Date of filing: 09.01.2014
(51) Int. Cl.: G06F 1/16

(54) **Entertainment apparatus**
Unterhaltungsvorrichtung
Appareil de divertissement

(30) Priority: 10.01.2013 GB 201300456
(43) Date of publication of application: 16.07.2014
(73) Proprietor: VOXX Incaar Systems GmbH, 50259 Pulheim (DE)
(72) Inventor: Mitchell, Ciaran, Woking, Surrey GU21 5DH (GB)
(74) Representative: Deans, Michael John Percy

(56) References cited:
- EP-B1- 1 144 222
- US-A- 4 879 705
- US-A- 5 872 756
- US-A1- 2004 227 696
- US-A1- 2005 289 570

## Description

This disclosure relates to entertainment apparatus, and more particularly to entertainment apparatus for use by a passenger in a vehicle.

Rear seat entertainment systems for cars (automobiles) are well known, and typically comprise a monitor with a monitor screen, the angle of which is often adjustable, mounted to the rear of a more forward seat for viewing by a passenger seated behind that seat. The monitor may be mounted in the seat-back itself, in a headrest for that seat or otherwise mounted to the back of the seat, to the back of the headrest or from posts mounting the headrest. The expression "mounted to a more forward seat of a vehicle" as used herein is intended to encompass all or any of these possibilities. Similar such entertainment systems are incorporated in the seat backs of aircraft passenger seats and in the seat-backs on some railway passenger seats and seats in long distance coach transport vehicles, and this disclosure extends to these applications as well as to cars (automobiles).

Particularly when used in motor vehicles, passengers desire to use the rear seat entertainment system to play music or films. For this reason rear seat entertainment systems have been developed that can play optically-readable discs, such as CDs, DVDS or Blu-Ray® Discs, often of varying format selected by the passenger. The standard practice is to provide the entertainment apparatus with an opening on the top, in the front face or in a side to receive a said disc.

Entertainment apparatus employed in a moving vehicle is subjected to acceleration forces and vibration and any mechanism associated with the loading, playing and ejection of optically-readable discs in such apparatus should be capable of withstanding such operating conditions.

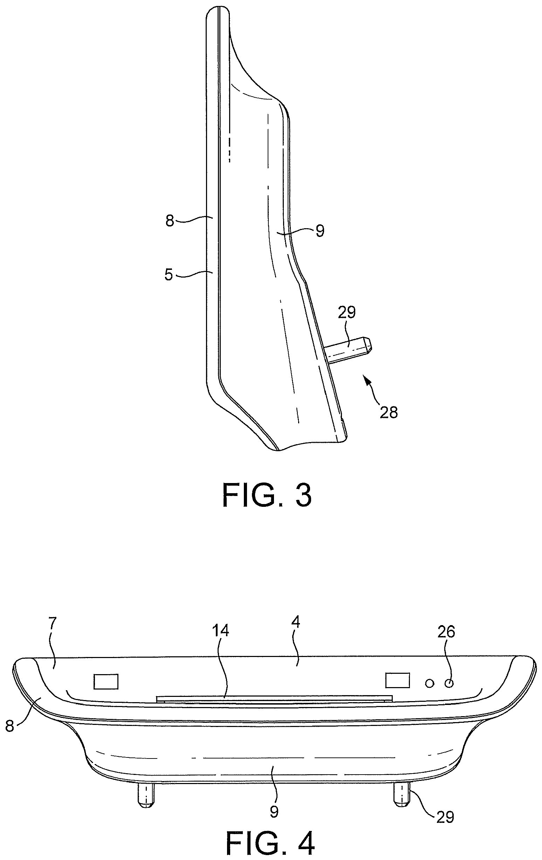

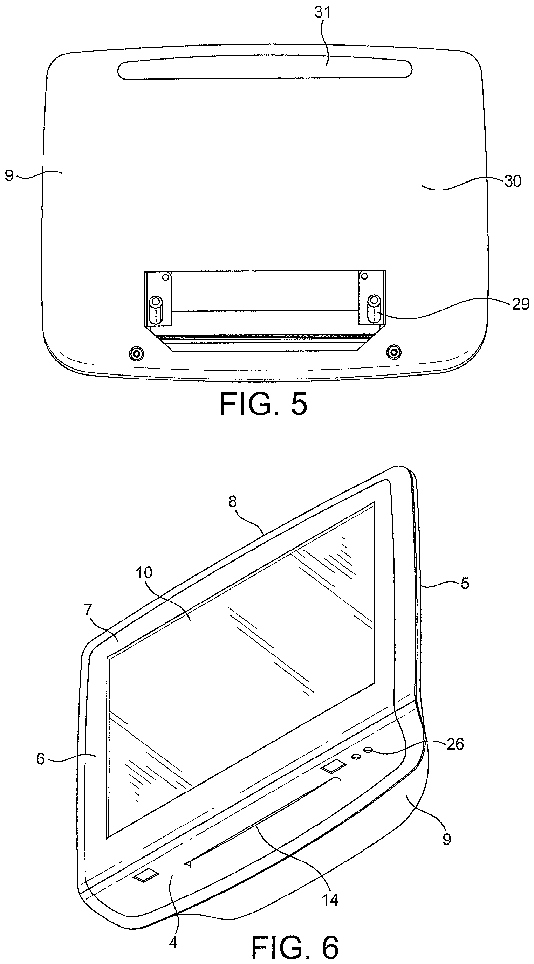

EP 1,144,222 discloses in-vehicle passenger entertainment apparatus comprising both a DVD player and a monitor that can be mounted onto the interior of a vehicle. The screen console with player 32 is expressly releasable from housing panel 80. The disc receiving opening 81 is in the bottom edge in the orientation of Figs 4 and 5.

US 2004/227,696 discloses a slot-entry entertainment apparatus pivotally mounted to a tray in which it is said to be a snug fit. The disc-receiving slot is in the bottom of the entertainment apparatus, but a disc cannot be inserted or removed when the apparatus is snugly received in its tray.

US 2005/289,570 discloses a load and eject device for an optical disk storage. The device has a first roller and a second roller, the first and second rollers each having a first end, a second end, and a centre. The diameters of the first and second roller centers are each smaller than the diameters of the first ends and second ends of the first and second rollers. The disc receiving opening pictured is on a side of an optical medium storage device, and a disk to be inserted or ejected moves in a horizontal plane. US 4,879,705 discloses a disc receiving mechanism for use with a disc player in which the disc receiving opening is on a side of an optical medium storage device, and a disk to be inserted or ejected moves in a horizontal plane. A disk is placed into a transfer plate, and the transfer plate moves the disk in a horizontal plane.

The current disclosure arises from our work seeking to improve entertainment systems for vehicles.

The invention is defined in appended claim 1. Preferred embodiments are defined in the appended claims.

An embodiment of entertainment apparatus, in accordance with our teaching, is more particularly described below by way of example only with reference to the accompanying generally schematic drawings, in which:

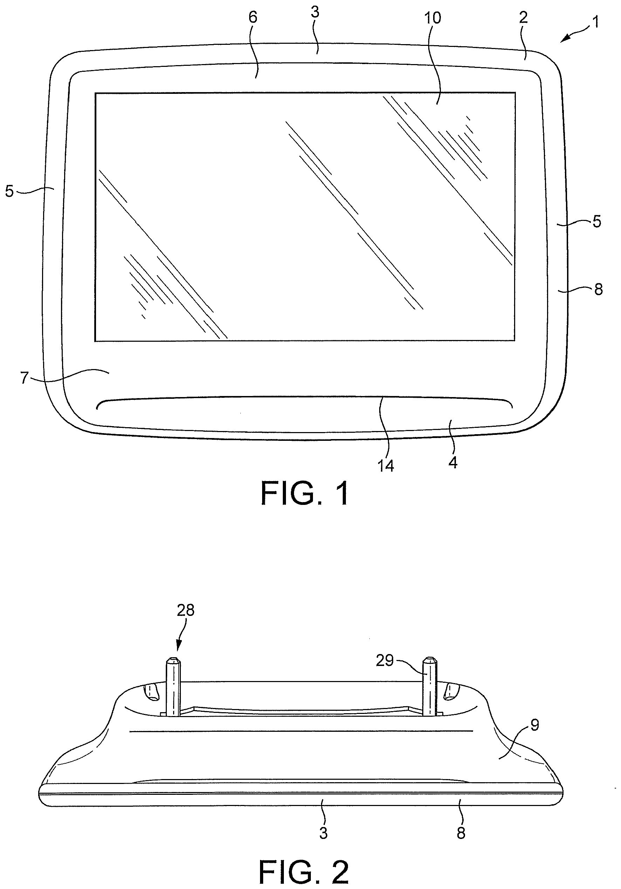

Fig. 1 is a front elevational view of an entertainment apparatus;
Fig. 2 is a top plan view of the entertainment apparatus of Fig. 1;
Fig. 3 is a side elevational view of the entertainment apparatus of Figs. 1 and 2;
Fig. 4 is a bottom plan view of the entertainment apparatus of Figs. 1-3;
Fig. 5 is a rear elevational view of the entertainment apparatus of Figs 1-4;
Fig. 6 is a perspective view of the entertainment apparatus of Figs. 1-5 as seen from the front and below to one side;

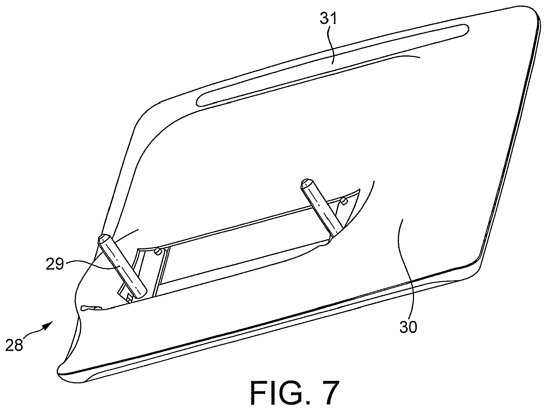

Fig. 7 is a perspective view of the entertainment apparatus of Figs. 1-6 as seen from the rear and below to one side;
Fig. 8 is an exploded perspective view of the entertainment apparatus of Figs. 1-7;
Fig. 9 is a scrap sectional view showing the frictional disc holder; and
Fig. 10 is a scrap sectional view with an optically readable disc frictionally held by the frictional disc holder of Fig. 9.

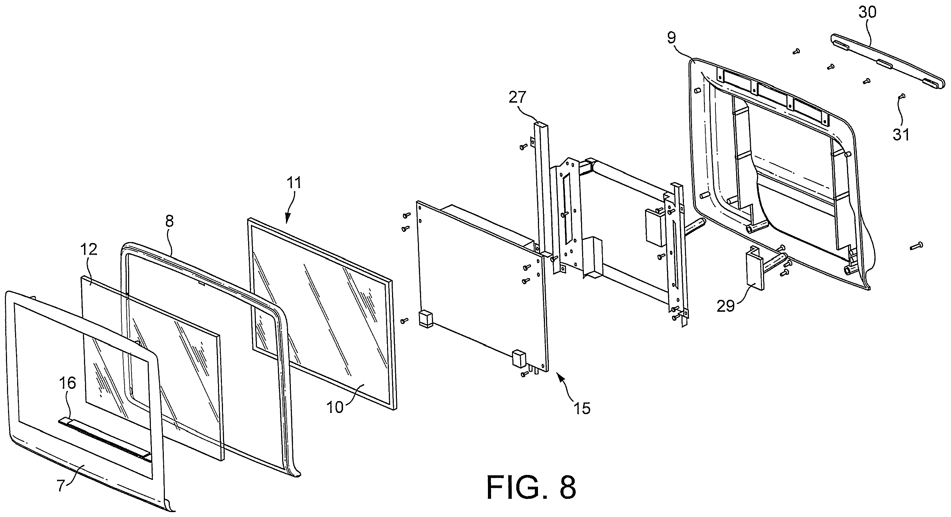

An entertainment apparatus 1 for a passenger of a vehicle includes a casing 2. The casing 2 has a top edge region 3, a bottom edge region 4 and two respective side edge regions 5 interconnecting the top and bottom edge regions 3 and 4. The four edge regions frame and define a front side 6. As best shown in Fig. 8, the casing 2 is formed in three separate parts, a front moulding 7, a bezel moulding 8 and a rear moulding 9.

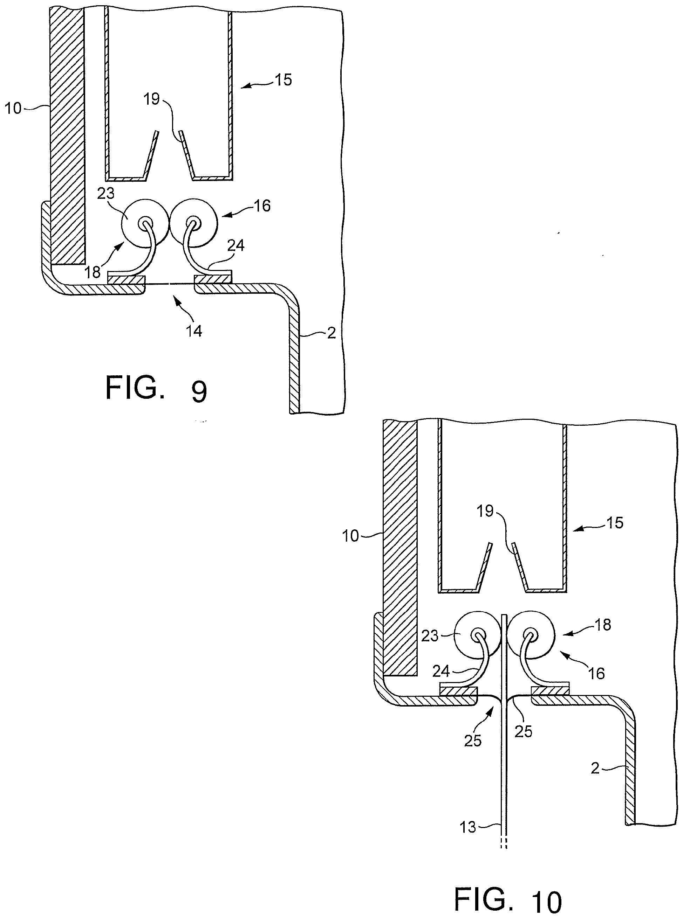

A monitor screen 10 together with a touchscreen panel 11 and associated screen protector 12 (Fig. 8) are provided in the front side 6 of the casing 2. The apparatus 1 is adapted to play optically-readable discs 13 (Fig. 10). For this purpose the casing 2 is provided with an opening 14 in its bottom edge region 4 for receiving and ejecting the optically-readable discs 13 in a generally vertical plane.

The monitor screen 10 is suitably a flat LED, OLED or LCD screen so that the apparatus may adopt a slim profile. Mounted within the casing 2, directly behind the screen 10, is a disc playing mechanism 15 (Fig. 8). When inserted into the opening 14, a disc 13 is guided into the disc playing mechanism 15 by a disc guide 16. A frictional disc holder 18, which serves both as disc guide and frictional disc holder (Figs. 9 and 10) is provided within opening 14 for a purpose to be explained.

In the arrangement illustrated in Figs. 9 and 10, frictional disc holder 18 is mounted between the disc guide 16 and confronting edge regions of the opening 14. The frictional disc holder 18 comprises two members 20 adapted to receive a disc 13 therebetween and to apply friction to the disc 13 when so received. The members 20 are chosen so that the frictional force applied to a disc 13 inserted between the members 20 is sufficient to prevent the disc 13 falling out of the opening 14 under the effect of gravity, as shown by Fig. 10 in which the disc 13 is unsupported except by the members 20, but insufficient to cause damage to the disc 13 or to prevent the disc 13 from being manually pushed past the members 20 either for receipt in the disc playing mechanism 15 of the apparatus 1 or to remove the disc 13 from the apparatus 1 upon ejection.

The frictional disc holder 18 comprises a pair of wheels 23 spring loaded against each other as shown in Figs. 9 and 10. The wheels 23 are preferably made from injection moulded thermoplastic elastomer or coated therewith and are mounted on spring arms 24 within the casing on either side of the opening 14. The spring arms 24 may be formed of steel. The frictional disc holder 18 also acts as the disc guide 16. A dust cover 25 may also be provided to prevent dust from entering the apparatus 1.

The entertainment apparatus 1 may incorporate speakers or be coupled by cable or wirelessly to external speakers mounted in the vehicle. Alternatively, as shown in Fig. 4, the entertainment apparatus may include a connection 26 suitable for use with headphones.

The entertainment apparatus may include a control panel for operating the entertainment apparatus. Alternatively, as shown in the exploded view of Fig. 8, the screen may incorporate touchscreen technology, here in the form of a touchscreen panel 11 for operating the entertainment apparatus.

The mechanical and electronic components of the disc playing mechanism 15 are suitably supported inside the casing 2 of the entertainment apparatus 1 by a frame 27. The frame 27 may also be used as part of a fitting assembly 28 adapted to fit the entertainment apparatus to the rear of a more forward seat of the vehicle, thereby providing an enhanced vibration proof mounting for the apparatus. The frame 27 is suitably formed of folded steel and associated with drawing bars 29 to which the frame 27 is bolted. The drawing bars 29 extend through an opening in the rear moulding 9 of casing 2 for insertion into cooperating receptacles (not shown) fixed in the back of a vehicle seat or of a headrest therefor.

To improve the overall aesthetic appearance of the apparatus 1, a cover 30 may be used to cover screws 31 employed to connect the front and rear mouldings 7 and 9 to each other.

We have found that shorter passengers, such as children, seated in a rear passenger seat of a vehicle, find it easier to insert an optically-readable disc into or remove an ejected disc from an entertainment apparatus when the opening for the disc is provided in a bottom region of the casing of the entertainment apparatus. Provision of a suitable frictional disc holder associated within the opening for the disc in the casing ensures that a disc cannot simply fall out of the entertainment apparatus under its own weight. With the disc opening in the bottom edge region of the casing, there is less risk of dust and dirt reaching the disc playing mechanism

## Claims

1. An entertainment apparatus for use by a passenger seated on a seat of a vehicle, the apparatus comprising: a casing (2) having a top edge region (3), a bottom edge region (4) and two respective side edge regions (5) interconnecting the top and bottom edge regions (3 and 4), the four such edge regions framing and defining a front side (6) of the entertainment apparatus (1), the front side (6) being provided with a monitor screen (10); the apparatus (1) including a disc playing mechanism within the casing, wherein said disc playing mechanism is adapted to play optically-readable discs (13); and the apparatus (1) being adapted to be mounted to a seat immediately more forward than said seat; the apparatus (1) being provided with an opening (14) in the said bottom edge region (4) of its casing (2) for receiving and ejecting said optically-readable discs (13) in a generally vertical plane; and
the apparatus being **characterised in that** it comprises a frictional disc holder (18) positioned to receive an optically-readable disc (13) that is inserted through said opening (14), the frictional disc holder (18) comprising two members (20), each comprising a respective freely rotatable wheel (23) spring loaded against the other, between which the disc (13) is received, the members applying friction to said disc (13) when so received, said friction being sufficient to prevent the disc (13) falling out of the opening (14) under the effect of gravity, but insufficient to cause damage to said disc (13) or to prevent said disc (13) from being manually pushed past said members (20) either for receipt in disc playing mechanism (15) mounted within the said casing (2) or to remove said disc (13) from the apparatus (1) upon ejection.

2. Apparatus according to Claim 1, further **characterised in that** at least one of the said wheels (23) is mounted on a spring arm (24), the wheels (23) being positioned on either side of the opening (14) within the entertainment apparatus (1).

3. Apparatus according to any preceding Claim, further **characterised in that** the apparatus (1) incorporates speakers, is adapted to be coupled by cable or wirelessly to external speakers mounted in the vehicle, includes a connection (26) suitable for use with headphones.

4. Apparatus according to any preceding Claim, further **characterised in that** the casing (2) includes a control panel for operating the entertainment apparatus.

5. Apparatus according to any of Claims 1 to 3, further **characterised in that** the monitor screen (10) incorporates touchscreen technology for operating the apparatus.

6. Apparatus according to any of Claims 1 to 3, further **characterised in that** the entertainment apparatus (1) is adapted to be controlled from a remote control operated by the passenger or remote control buttons provided in the passenger's seat, in either case linked by cable, infra-red or wirelessly to the apparatus (1).

7. Apparatus according to any preceding Claim, further **characterised in that** the disc playing mechanism (15) is supported within the casing (2) by a frame (27), preferably manufactured from folded steel.

8. Apparatus according to Claim 7, further **characterised in that** the frame (27) forms part of a fitting assembly (28) adapted to fit the entertainment apparatus (1) as a whole to the back of a more forward seat of the vehicle or its headrest.

9. Apparatus according to any preceding Claim, further **characterised in that** the disc playing mechanism (15) is located immediately behind the monitor screen (10), so that the apparatus (1) may be mounted flat against the seat back or headrest back or partially inset into the seat back or headrest back while leaving the monitor screen (10) and disc opening (14) exposed and the monitor screen (10) preferably comprises a flat LED, OLED or LCD screen.

## Patentansprüche

1. Unterhaltungsgerät zur Verwendung durch einen Mitfahrer, der auf einem Sitz eines Fahrzeugs sitzt, wobei das Gerät umfasst: ein Gehäuse (2) mit einem oberen Randbereich (3), einem unteren Randbereich (4) und zwei jeweiligen Seitenrandbereichen (5), die den oberen und den unteren Randbereich (3 und 4) miteinander verbinden, wobei die vier solchen Randbereiche eine Vorderseite (6) des Unterhaltungsgerätes (1) einrahmen und definieren, wobei die Vorderseite (6) mit einem Monitorschirm (10) versehen ist; wobei das Gerät (1) einen Plattenwiedergabemechanismus innerhalb des Gehäuses aufweist, wobei der Plattenwiedergabemechanismus geeignet ist, optisch lesbare Platten (13) abzuspielen; und wobei das Gerät (1) geeignet ist, an einem Sitz unmittelbar weiter vorne als der genannte Sitz angebracht zu werden; wobei das Gerät (1) mit einer Öffnung (14) in dem unteren Randbereich (4) seines Gehäuses (2) zum Aufnehmen und Auswerfen der optisch lesbaren Platten (13) in einer allgemein vertikalen Ebene versehen ist; und wobei die Vorrichtung **dadurch gekennzeichnet ist, dass** sie einen Reibungsplattenhalter (18) umfasst, der so positioniert ist, dass er eine optisch lesbare Platte (13) aufnimmt, die durch die Öffnung (14) eingeführt wird, wobei der Reibungsplattenhalter (18) zwei Elemente (20) umfasst, von denen jedes ein entsprechendes frei drehbares Rad (23) umfasst, das gegen das andere federbelastet ist, zwischen denen die Plate (13) aufgenommen wird, wobei die Elemente Reibung auf die Platte (13) ausüben, wenn sie so aufgenommen wird, wobei die Reibung ausreicht, um zu verhindern, dass die Platte (13) unter der Wirkung der Schwerkraft aus der Öffnung (14) herausfällt, aber nicht ausreicht, um eine Beschädigung der Platte (13) zu verursachen oder zu verhindern, dass die Platte (13) manuell an den Elementen (20) vorbei geschoben wird, entweder zur Aufnahme in einem Plattenabspielmechanismus (15), der in dem Gehäuse (2) montiert ist, oder um die Platte (13) beim Auswerfen aus dem Gerät (1) zu entfernen.

2. Gerät nach Anspruch 1, ferner **dadurch gekennzeichnet, dass** mindestens eines der Räder (23) an einem Federarm (24) montiert ist, wobei die Räder (23) auf beiden Seiten der Öffnung (14) innerhalb des Unterhaltungsgerätes (1) angeordnet sind.

3. Gerät nach einem der vorhergehenden Ansprüche, ferner **dadurch gekennzeichnet, dass** das Gerät (1) Lautsprecher enthält, so angepasst ist, dass es über Kabel oder drahtlos mit externen Lautsprechern, die im Fahrzeug montiert sind, verbunden werden kann, eine Verbindung (26) enthält, die zur Verwendung mit Kopfhörern geeignet ist.

4. Gerät nach einem der vorhergehenden Ansprüche, ferner **dadurch gekennzeichnet, dass** das Gehäuse (2) ein Bedienfeld zur Bedienung des Unterhaltungsgerätes aufweist.

5. Gerät nach einem der Ansprüche 1 bis 3, ferner **dadurch gekennzeichnet, dass** der Monitorschirm (10) eine Touchscreen-Technologie zur Bedienung des Geräts enthält.

6. Gerät nach einem der Ansprüche 1 bis 3, ferner **dadurch gekennzeichnet, dass** das Unterhaltungsgerät (1) so ausgelegt ist, dass es von einer Fernbedienung, die durch den Mitfahrer bedient wird, oder von Fernbedienungsknöpfen, die im Mitfahrersitz vorgesehen sind, gesteuert werden kann, die in beiden Fällen durch Kabel, Infrarot oder drahtlos mit dem Gerät (1) verbunden sind.

7. Gerät nach einem der vorhergehenden Ansprüche, ferner **dadurch gekennzeichnet, dass** der Plattenabspielmechanismus (15) innerhalb des Gehäuses (2) durch einen Rahmen (27), vorzugsweise aus gefalztem Stahl hergestellt, getragen wird.

8. Gerät nach Anspruch 7, ferner **dadurch gekennzeichnet, dass** der Rahmen (27) Teil einer Montageanordnung (28) ist, die so angepasst ist, dass sie das Unterhaltungsgerät (1) als Ganzes an die Rückenlehne eines weiter vorn im Fahrzeug befindlichen Sitzes oder seine Kopfstütze anpasst.

9. Gerät nach einem der vorhergehenden Ansprüche, ferner **dadurch gekennzeichnet, dass** der Plattenabspielmechanismus (15) unmittelbar hinter dem Monitorschirm (10) angeordnet ist, so dass das Gerät (1) flach gegen die Rückenlehne oder die Kopfstützenrückseite montiert oder teilweise in die Rückenlehne oder die Kopfstützenrückseite eingesetzt werden kann, während der Monitorschirm (10) und die Plattenöffnung (14) freiliegend bleiben und der Monitorschirm (10) vorzugsweise einen flachen LED-, OLED- oder LCD-Bildschirm umfasst.

## Revendications

1. Un appareil de divertissement à l'usage d'un passager assis dans un siège d'un véhicule, l'appareil comprenant : un boîtier (2) ayant une région de bord supérieur (3), une région de bord inférieur (4) et deux régions de bords latéraux (5) respectives interconnectées avec les régions de bord supérieur et de bord inférieur (3 et 4), lesdites quatre régions de bord définissant et encadrant une face frontale (6) de l'appareil de divertissement, la face frontale (6) étant munie d'un écran d'affichage (10) ;
l'appareil (1) incluant un mécanisme de lecture de disque à l'intérieur du boîtier, dans lequel ledit mécanisme de lecture de disque est agencé pour lire des disques optiques (13) ; et
l'appareil (1) étant agencé pour être monté sur un siège immédiatement devant ledit siège ;
l'appareil (1) étant muni d'une ouverture (14) dans ladite région de bord inférieur (4) de son boîtier (2) pour recevoir et éjecter lesdits disques optiques (13) dans un plan globalement vertical ; et
l'appareil étant **caractérisé en ce qu'**il comprend un support de disque à friction (18) positionné pour recevoir un disque optique (13) qui est inséré par ladite ouverture (14), le support de disque à friction (18) comprenant deux membres (20), chacun comprenant respectivement une roulette libre en rotation (23) appuyée sur l'autre par ressort entre lesquelles est reçu le disque (13),
les membres appliquant un frottement sur ledit disque (13) quand il est ainsi reçu,
ledit frottement étant suffisant pour empêcher le disque (13) de tomber à l'extérieur de l'ouverture sous l'effet de la pesanteur, mais insuffisant pour abîmer ledit disque (13) ou pour empêcher ledit disque (13) d'être poussé manuellement au-delà desdits membres (20) que ce soit pour le recevoir au sein du mécanisme de lecture de disque (15) monté dans ledit boîtier ou que ce soit pour retirer ledit disque de l'appareil (1) lors d'une éjection.

2. Appareil selon la revendication 1, **caractérisé en outre en ce qu'**au moins une desdites roulettes (23) est montée sur un bras ressort (24), les roulettes (23) étant positionnées des deux côtés de l'ouverture (14) dans l'appareil de divertissement (1).

3. Appareil selon l'une quelconque des revendications précédentes, **caractérisé en outre en ce que** l'appareil (1) intègre des haut-parleurs, est agencé pour être connecté par câble ou sans fil à des haut-parleurs extérieurs montés dans le véhicule, inclut une connexion (26) apte à utiliser un casque audio.

4. Appareil selon l'une quelconque des revendications précédentes, **caractérisé en outre en ce que** le boîtier (2) inclut un panneau de contrôle pour la mise en œuvre de l'appareil de divertissement.

5. Appareil selon l'une quelconque des revendications 1 à 3, **caractérisé en outre en ce que** l'écran d'affichage (10) intègre une technologie tactile pour la mise en œuvre de l'appareil.

6. Appareil selon l'une quelconque des revendications 1 à 3, **caractérisé en outre en ce que** l'appareil de divertissement (1) est agencé pour être commandé depuis une télécommande actionnée par le passager ou depuis des boutons de commande prévus sur le siège du passager, dans les deux cas par connexion par fil, infrarouge ou sans fil, avec l'appareil (1).

7. Appareil selon l'une quelconque des revendications précédentes, **caractérisé en outre en ce que** le mécanisme de lecture de disque (15) est maintenu dans le boîtier (2) par un cadre (27), réalisé de préférence en acier plié.

8. Appareil selon la revendication 7, **caractérisé en outre en ce que** le cadre (27) fait partie d'un assemblage d'adaptation (28) agencé pour monter l'appareil (1) en un seul morceau sur le dos d'un siège du véhicule situé plus en avant ou sur son appuie-tête.

9. Appareil selon l'une quelconque des revendications précédentes, **caractérisé en outre en ce que** le mécanisme de lecture de disque (15) est situé immédiatement derrière l'écran d'affichage (10), de telle sorte que l'appareil (1) peut être monté à plat contre le dos du siège ou le dos de l'appuie-tête ou partiellement intégré dans le dos du siège ou le dos de l'appuie-tête, tout en laissant apparents l'écran d'affichage (10) et l'ouverture de disque (14), et **en ce que** l'écran d'affichage (10) comprend de préférence un écran plat LED, OLED ou LCD.
